# EUROPEAN PATENT SPECIFICATION

(11) **EP 2 148 460 B1**
(45) Date of publication and mention of the grant of the patent: **24.12.2014**
(21) Application number: 09009634.8
(22) Date of filing: 24.07.2009
(51) Int. Cl.: H04L 1/18, H04W 76/04, H04W 52/02

(54) **Method and apparatus for improving HARQ operation**
Verfahren und Vorrichtung zur Verbesserung des HARQ-Betriebs
Procédé et appareil pour améliorer le fonctionnement HARQ

(30) Priority: 24.07.2008 US 83513 P
(43) Date of publication of application: 27.01.2010
(73) Proprietor: Innovative Sonic Limited, Ebene 72201 (MU)
(72) Inventor: Tseng, Li-Chih, Peitou Taipei City (TW)
(74) Representative: Görz, Ingo

(56) References cited:
- EP-A1- 1 337 065
- WO-A1-2008/074771
- "3rd Generation Partnership Project; Technical Specification Group Radio Access Network; High Speed Downlink Packet Access (HSDPA); Overall description; Stage 2 (Release 7)", 3GPP STANDARD; 3GPP TS 25.308, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.1.0, 1 December 2006 (2006-12-01), pages 1-34, XP050367596,
- "3rd Generation Partnership Project; Technical Specification Group Radio Access Network; Continuous connectivity for packet data users (Release 7)", 3GPP STANDARD; 3GPP TR 25.903, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.0.0, 1 March 2007 (2007-03-01), pages 1-138, XP050369325,

## Description

The present invention relates to a method and apparatus for improving a Hybrid Automatic Repeat Request (HARQ) operation in a user equipment (UE) of a wireless communication system when the UE operates in an HS-SCCH less operation mode according to the pre-characterizing clauses of claims 1, and 4. Such methods are disclosed in 3GPP TS 25.308, V7.1.0.

The third generation (3G) mobile telecommunications system, the Universal Mobile Telecommunications System (UMTS), has adopted a Wideband Code Division Multiple Access (WCDMA) wireless air interface access method for a cellular network. WCDMA provides high frequency spectrum utilization, universal coverage, and high quality, highspeed multimedia data transmission. The WCDMA method also meets all kinds of QoS (Quality of Service) requirements simultaneously, providing diverse, flexible, two-way transmission services and better communication quality to reduce transmission interruption rates. Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting the third generation mobile telecommunication technology, the prior art provides High Speed Package Access (HSPA) technology, which includes High Speed Downlink Package Access (HSDPA) and High Speed Uplink Package Access (HSUPA), to increase bandwidth utility rate and package data processing efficiency to improve uplink/downlink transmission rate.

For HSDPA and HSUPA, the 3rd Generation Partnership Project (3GPP) provides a Continuous Packet Connectivity (CPC) protocol specification, which includes features that, for user equipments (UEs) in CELL_DCH state, aim to significantly increase the number of packet data users for a cell, reduce the uplink noise rise and improve achievable download capacity for VoIP.

For an HSDPA UE, the UE can work in a special mode, HS-SCCH less operation, included in CPC, for reducing the loading on a High Speed Shared Control Channel (HS-SCCH). Under this mode, a first transmission of a Hybrid Automatic Repeat Request (HARQ) procedure is performed without accompaniment of HS-SCCH signaling. In this case, the UE needs to perform blind decoding to receive data from a high speed physical downlink shared channel (HS-PDSCH) according to predefined control information, such as channel coding set, modulation scheme, transport block (TB) size, obtained when the HS-SCCH less operation is enabled, so as to reduce HS-SCCH overhead and UE power consumption. Note that, in the HS-SCCH less operation, the same data is limited to three HARQ transmissions at most; In other words, HARQ retransmissions corresponding to the first transmission are restricted to two times. Moreover, when performing the HARQ retransmission, the network has to transmit corresponding control information on the HS-SCCH so that the UE can know how to receive data from the HS-PDSCH.

As to detailed HARQ operation for the HS-SCCH less operation, please refer to the associated 3GPP communications protocol specification, e.g. 3GPP TR 25.903, V7.0.0 under chapter 4.7 and 4.8. When the first transmission of the HARQ procedure is received, the UE shall decode the received data according to the predefined control information. If the data is successfully decoded, the UE delivers a decoded MAC-hs PDU to an upper layer reordering entity, and reports a positive acknowledgement (ACK) to the network for terminating the HARQ procedure. Else, if the data cannot be successfully decoded, the UE places the received data in a soft buffer corresponding a current Transmission Time Interval (TTI), replacing any data previously stored in the soft buffer, and waits for the second transmission, also called the first retransmission, without reporting a negative acknowledgement (NACK) to the network.

When the HARQ retransmission is performed, the control information, such as "second or third transmission" and "pointer to the previous transmission (PTR)", are transmitted on the HS-SCCH. The PTR is utilized for indicating the UE a TTI of the previous transmission such that data stored in a soft buffer of the previous transmission can be obtained. When an HARQ retransmission, such as the first retransmission, is received, the UE shall determine whether the data stored in the soft buffer of the previous transmission has been successfully decoded by the PTR. If the data stored in the soft buffer of the previous transmission has not been successfully decoded, the UE shall combine the received retransmission data with the data stored in the soft buffer of the previous transmission, and decode the combined data according to the control information transmitted on the HS-SCCH. If the combined data is decoded successfully, the UE delivers a decoded MAC-hs PDU to an upper layer reordering entity, and reports an ACK to the network for terminating the HARQ procedure. Else, if the combined data cannot be decoded successfully, the UE places the combined data in a soft buffer corresponding to this TTI, reports a NACK to the network and waits for the third transmission. The process of the third transmission is identical to that of the second transmission and is not narrated again herein.

Based on current protocol specifications, the soft buffer of the previous transmission and the soft buffer corresponding to the current TTI can be determined by the following equations, respectively: [5×CFN + SubFN - 6 - PTR] mod 13, and [5×CFN + SubFN] mod 13, wherein CFN is connection frame number, SubFN is sub-frame number, PTR is pointer to the previous transmission, and mod is modulo operation. That means, the UE utilizes the TTI of each transmission to identify the corresponding soft buffer for obtaining the transmission data or combined data.

From the above, it is known that when the network does not receive an ACK corresponding to the first transmission, the network will start the second transmission. Or, when the network receives a NACK corresponding to the second transmission, the network will start the third transmission. However, even if the UE decodes the data of the first transmission or the data of the second transmission successfully and reports a corresponding ACK, the network may not receive the ACK or may decode the ACK as a NACK due to poor communication quality in the environment, and thereby starts a retransmission.

In this case, when the HARQ retransmission is received, the UE shall first determine whether the data stored in the soft buffer of the previous transmission has been successfully decoded. However, the prior art merely places the data that has not been successfully decoded into the soft buffer, but not specifies whether to store the successfully decoded data. Thus, Under a situation that the UE has sent an ACK, which means the transmission data or combined data corresponding to the previous transmission has been decoded successfully and delivered to the upper reordering entity, the soft buffer of the previous transmission, i.e. identified by [5×CFN + SubFN - 6 - PTR] mod 13, may not exist any data corresponding to the previous transmission. As a result, the UE of the prior art cannot determine the decoding status of the previous transmission, causing the UE may miss reception of the retransmission data.

In conclusion, when the UE has sent an ACK but the network does not receive the ACK or decodes the ACK as a NACK, the network would send a retransmission to the UE. Under this situation, the UE cannot determine the decoding status of the previous transmission, resulting the UE may miss reception of the retransmission data or causing unexpected program error.

WO 2008/074771 A1 discloses a link laver control protocol implementation in a communication system. To improve operative efficiency of the link laver control protocol implementation it is suggested to delay issuance of a retransmission request for a missing data unit during a retransmission delay time period.

EP 1 337 065 A1 discloses a method and device for handling received data units at the receiving peer of a predetermined data unit exchange protocol at a given layer. The method and device carry out a limited ARQ mechanism for received data units, and are characterized by providing the possibility of storing corrupted copies of received data units, and providing a data unit to an upward release handler on the basis of one or more stored corrupted copies of a given data unit after a triggering event terminating the operation of the retransmission request procedure for the given data unit.

This in mind, the present invention aims at providing a method and apparatus for improving a Hybrid Automatic Repeat Request (HARQ) operation in a user equipment (UE) of a wireless communications system.

This is achieved by a method and apparatus for improving a Hybrid Automatic Repeat Request (HARQ) operation in a user equipment (UE) of a wireless communication system when the UE operates in an HS-SCCH less operation mode I according to the pre-characterizing clauses of claims 1, and 4. The dependent claims pertain to corresponding further developments and improvements.

In the following, the invention is further illustrated by way of example, taking reference to the accompanying drawings. Thereof
FIG.1 is a schematic diagram of a wireless communications system.
FIG.2 is a function block diagram of a wireless communications device.
FIG.3 is a diagram of program code of FIG.2.
FIG.4 is a flowchart of a process according to an example of the present invention.
FIG.5 is a flowchart of a process according to an embodiment of the present invention.

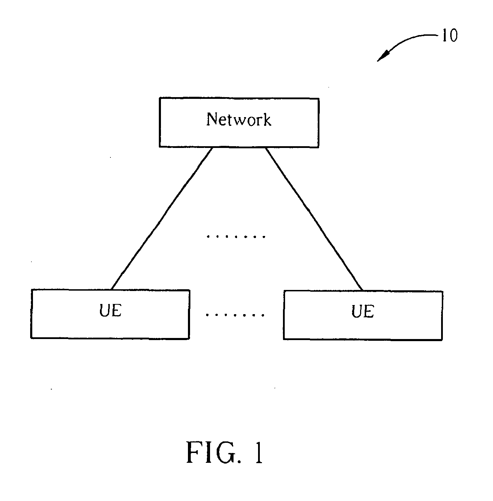

Please refer to FIG.1, which illustrates a schematic diagram of a wireless communications system 10. The wireless communications system 10 is preferred to be a High Speed Package Access (HSPA) system, and is briefly composed of a network and a plurality of user equipments (UEs). In FIG.1, the network and the UEs are simply utilized for illustrating the structure of the wireless communications system 10. Practically, the network may comprise a plurality of base stations (Node Bs), radio network controllers and so on according to actual demands, and the UEs can be devices such as mobile phones, computer systems, etc.

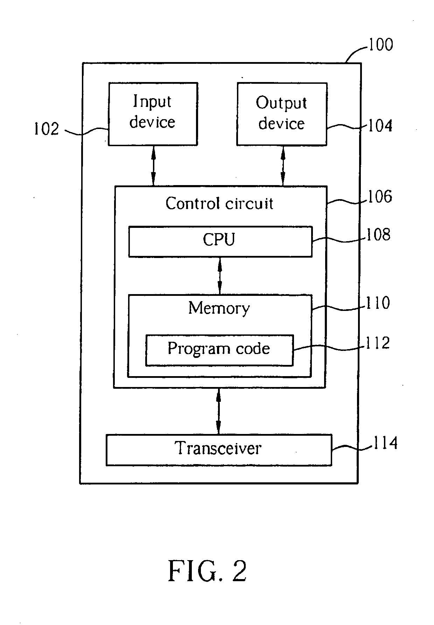

Please refer to FIG.2, which is a functional block diagram of a communications device 100 in a wireless communications system. The communications device 100 can be utilized for realizing the UEs in FIG .1, and the wireless communications system is preferably the LTE system. For the sake of brevity, FIG.2 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

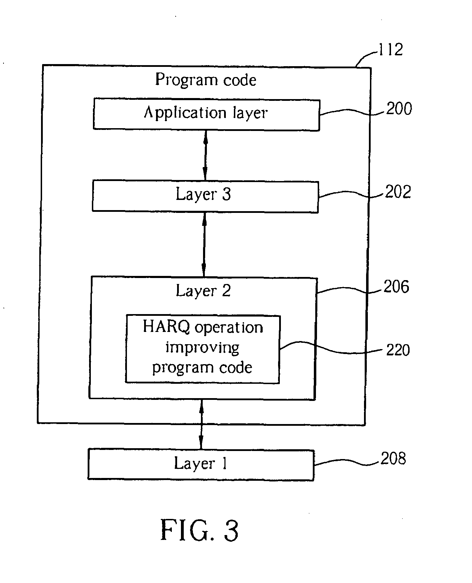

Please continue to refer to FIG.3. FIG.3 is a diagram of the program code 112 shown in FIG.2. The program code 112 includes an application layer 200, a Layer 3 202, and a Layer 2 206, and is coupled to a Layer 1 208. The Layer 3 202 performs radio resource control. The Layer 2 206 comprises a Radio Link Control (RLC) layer and a Medium Access Control (MAC) layer, and performs link control. The Layer 1 208 performs physical connections.

When the UE operates in an HS-SCCH less operation mode, a network terminal of the wireless communications system 10 does not transmit required control signals to the UE via a High Speed Shared Control Channel (HS-SCCH) for a first transmission of an Hybrid Automatic Repeat Request (HARQ) procedure, and the UE decodes data of the first transmission according to predefined control information. In this case, the embodiment of the present invention provides an HARQ operation improving program code 220 in the Layer 2 206 for improving a situation that the UE cannot determine a decoding status of a previous transmission when the network sends a retransmission to the UE because the UE has sent a positive acknowledgement (ACK) but the network does not receive the ACK or decodes the ACK as a negative acknowledgement (NACK).

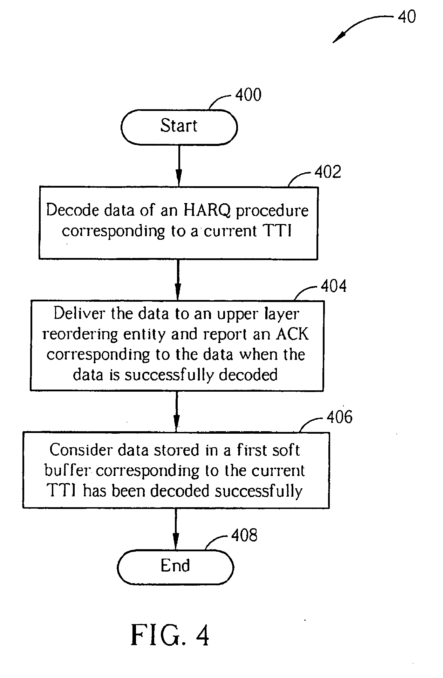

Please refer to FIG.4, which illustrates a schematic diagram of a process 40 according to an example of the present invention. The process 40 is utilized for improving an HARQ operation in a UE of the wireless communications system 10, and can be compiled into the HARQ operation improving program code 220. The UE operates in the HS-SCCH less operation. The process 40 includes the following steps:
Step 400: Start.
Step 402: Decode data of an HARQ procedure corresponding to a current Transmission Time Interval (TTI).
Step 404: Deliver the data to an upper layer reordering entity and report an ACK corresponding to the data when the data is successfully decoded.
Step 406: Consider data stored in a first soft buffer corresponding to the current TTI has been decoded successfully.
Step 408: End.

According to the process 40, the UE first decodes data of an HARQ procedure corresponding to a current TTI. If the data is successfully decoded, the UE delivers the data to an upper layer reordering entity and reports an ACK of the data corresponding to this TTI. Moreover, the UE considers data stored in a first soft buffer corresponding to this current TTI has been decoded successfully.

On the other hand, if the data cannot be successfully decoded, the UE stores the data in the first soft buffer and replaces any data previously stored in the first buffer. It is noted that the said data corresponding to the current TTI can be a first transmission data of the HARQ procedure, or a combined data generated by combining a retransmission data of the HARQ procedure corresponding to the current TTI with data stored in a second soft buffer corresponding to a previous transmission. According to current protocol specifications, the second soft buffer corresponding to the previous transmission and the first soft buffer corresponding to the current TTI can be determined by the following equations, respectively: [5×CFN + SubFN - 6 - PTR] mod 13, and [5×CFN + SubFN] mod 13, wherein CFN is connection frame number, SubFN is sub-frame number, PTR is pointer to the previous transmission, and mod is modulo operation.

Thus, when a next retransmission of the HARQ procedure is received, the UE can perform the following HARQ procedure based on whether the data stored in the first soft buffer is considered successfully decoded no matter whether there exists data in the first soft buffer.

For example, if the data stored in first soft buffer is considered successfully decoded, the UE directly delivers data of the next retransmission to the upper layer reordering entity, and report an ACK to the network; Otherwise, the first soft buffer must exist data that has not been successfully decoded, and thus the UE shall combine the data of the next retransmission with the data stored in the first soft buffer and then decode the combined data according to control information transmitted on the HS-SCCH.

As a result, when the network sends a retransmission to the UE because the UE has sent an ACK but the network does not receive the ACK or decodes the ACK as a NACK, even if there does not exist any data in the soft buffer corresponding to the previous transmission, e.g. the UE does not store data of the previous transmission into the soft buffer when the data of the previous transmission is successfully decoded, the embodiment of the present invention can avoid the situation that the UE cannot determine the decoding status of the previous transmission, and prevent the UE from missing reception of the retransmission data or unexpected program error.

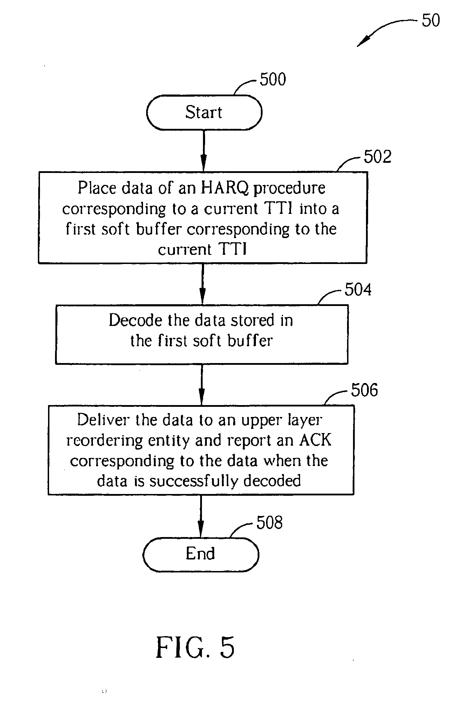

Please refer to FIG.5, which illustrates a schematic diagram of a process 50 according to an embodiment of the present invention. The process 50 is utilized for improving an HARQ operation in a UE of the wireless communications system 10, and can also be compiled into the HARQ operation improving program code 220. The UE operates in the HS-SCCH less operation. The process 50 includes the following steps:
Step 500: Start.
Step 502: Place data of an HARQ procedure corresponding to a current TTI into a first soft buffer corresponding to the current TTI.
Step 504: Decode the data stored in the first soft buffer.
Step 506: Deliver the data to an upper layer reordering entity and report an ACK corresponding to the data when the data is successfully decoded.
Step 508: End.

According to the process 50,when the UE receives data of an HARQ procedure corresponding to a current TTI, the UE shall first store the received data into a first soft buffer corresponding to the current TTI. Then, the UE decodes the data stored in the first soft buffer. If the data is successfully decoded, the UE delivers the data to an upper layer reordering entity and reports an ACK corresponding to the data to the network.

Similarly, the said data corresponding to the current TTI can be a first transmission data of the HARQ procedure, or a combined data generated by combining a retransmission data of the HARQ procedure corresponding to the current TTI with data stored in a second soft buffer corresponding to a previous transmission.

In the embodiment of the present invention, the UE stores the received data into the soft buffer corresponding to the current TTI before the decoding process is performed, no matter whether the received data can be successfully decoded. Therefore, when the UE receives a next retransmission of the HARQ procedure and has to determine whether the data stored in the soft buffer corresponding to the previous transmission has been decoded successfully, since there must exist data in the soft buffer corresponding to the previous transmission, the decoding status of the previous transmission can be directly determined. As a result, the embodiment of the present invention avoids the situation that the UE cannot determine the decoding status of the previous transmission, and the UE can perform the following HARQ procedure successfully.

In summary, the embodiment of the present invention provides a method for improving the HARQ procedure when the UE works in the HS-SCCH less operation, to avoid the situation that the UE cannot determine the decoding status of the previous transmission, and prevent the UE from missing reception of the retransmission data or unexpected program error.

## Claims

1. A method for improving a Hybrid Automatic Repeat Request, named HARQ hereinafter, operation in a user equipment, named UE hereinafter, of a wireless communication system, the UE operating in an HS-SCCH less operation mode, **characterized by** the method comprises:
placing data of an HARQ procedure corresponding to a current Transmission Time Interval, named TTI hereinafter, into a first soft buffer corresponding to the current TTI (502);
decoding the data placed in the first soft buffer (504); and
delivering the data to an upper layer reordering entity and reporting a positive acknowledgement, named ACK hereinafter, corresponding to the data when the data is successfully decoded (506), wherein the data is a first transmission data of the HARQ procedure.

2. The method of claim 1, **characterized in that** the first soft buffer is determined by a rule as [5×CFN + SubFN] mod 13, wherein CFN is connection frame number, SubFN is sub-frame number, and mod is modulo operation.

3. The method of claim 1, **characterized in that** in the HS-SCCH less operation, a network terminal of the wireless communications system does not transmit required control signals to the UE via a High Speed Shared Control Channel, named HS-SCCH, for a first transmission of the HARQ procedure, and the UE decodes data of the first transmission according to predefined control information.

4. A communication device (100) for improving a Hybrid Automatic Repeat Request, named HARQ hereinafter, operation in a user equipment, named UE hereinafter, of a wireless communication system, the UE operating in an HS-SCCH less operation mode, the communication device (100) comprising:
a processor (108) for executing a program code (112); and
a memory (110) coupled to the processor (108) for storing the program code (112), wherein the processor is adapted to carry out the method according to one of the claims 1 to 3.

## Patentansprüche

1. Verfahren zur Verbesserung einer Funktion einer hybriden automatischen Widerholungsanforderung, im Folgenden als HARQ bezeichnet, in einem Anwendergerät, im Folgenden als UE bezeichnet, eines Funkkommunikationssystems, wobei das UE in einem HS-SCCH-losen Betriebsmodus betrieben wird,
**dadurch gekennzeichnet, dass** das Verfahren umfasst:
Platzieren von Daten einer zu einem gegenwärtigen Übertragungszeitintervall, im Folgenden als TTI bezeichnet, korrespondieren HARQ-Prozedur, in einem zu dem gegenwärtigen TTI korrespondierenden ersten Soft-Puffer (502);
Dekodieren der in dem ersten Soft-Puffer platzierten Daten (504); und
Liefern der Daten an eine Neuordnungseinheit einer höheren Schicht und melden einer zu den Daten korrespondierenden positiven Rückmeldung, im Folgenden als ACK bezeichnet, wenn die Daten erfolgreich dekodiert wurden (506), wobei die Daten erste Übertragungsdaten der HARQ-Prozedur sind.

2. Verfahren nach Anspruch 1, **dadurch gekennzeichnet, dass** der erste Soft-Puffer durch eine Regel als [5xCFN + SubFN] mod 13 bestimmt wird, wobei CFN eine Verbindungsframenummer ist, SubFN eine Unterframenummer ist und mod eine Modulo-Operation ist.

3. Verfahren nach Anspruch 1, **dadurch gekennzeichnet, dass** in dem HS-SCCHlosen Betriebsmodus ein Netzwerkendgerät des Funkkommunikationssystems für eine erste Übertragung der HARQ-Prozedur benötigte Steuersignale nicht über einen geteilten Hochgeschwindigkeitssteuerkanal, im Folgenden als HS-SCCH bezeichnet, überträgt, und das UE Daten der ersten Übertragung entsprechend einer vordefinierten Steuerinformation dekodiert.

4. Kommunikationsvorrichtung (100) zur Verbesserung einer Funktion einer hybriden automatischen Widerholungsanforderung, im Folgenden als HARQ bezeichnet, in einem Anwendergerät, im Folgenden als UE bezeichnet, eines Funkkommunikationssystems, wobei das UE in einem HS-SCCH-losen Betriebsmodus betrieben wird, wobei die Kommunikationsvorrichtung (100) umfasst:
einen Prozessor (108) zum Ausführen eines Programmcodes (112); und
einen Speicher (110) zum Speichern des Programmcodes (112), der mit dem Prozessor (108) gekoppelt ist, wobei der Prozessor dazu eingerichtet ist, das Verfahren gemäß einem der Ansprüche 1 bis 3 auszuführen.

## Revendications

1. Procédé permettant d'améliorer une opération de demande de répétition automatique hybride, ci-après appelée HARQ, dans un équipement utilisateur, ci-après appelé UE, d'un système de communication sans fil, l'UE fonctionnant dans un mode de fonctionnement sans HS-SCCH, **caractérisé en ce que** le procédé comprend le fait :
de placer des données d'une procédure HARQ correspondant à un intervalle de temps de transmission actuel, ci-après appelé TTI, dans une première mémoire tampon souple correspondant au TTI actuel (502) ;
de décoder les données placées dans la première mémoire tampon souple (504) ; et
de délivrer les données à une entité de réordonnancement de couche supérieure et de rapporter un accusé de réception positif, ci-après appelé ACK, correspondant aux données lorsque les données sont décodées avec succès (506), où les données sont des données de première transmission de la procédure HARQ.

2. Procédé de la revendication 1, **caractérisé en ce que** la première mémoire tampon est déterminée par la règle [ 5 × CFN + SubFN ] mod 13, où CFN est le nombre de trames de connexion, SubFN est le nombre de sous-trames, et mod est une opération modulo.

3. Procédé de la revendication 1, **caractérisé en ce que** lors du fonctionnement sans HS-SCCH, un terminal de réseau du système de communication sans fil ne transmet pas des signaux de commande requis à l'UE via un canal de commande partagé à haute vitesse, appelé HS-SCCH, pour une première transmission de la procédure HARQ, et l'UE décode des données de la première transmission selon des informations de commande prédéfinies.

4. Dispositif de communication (100) pour améliorer une opération de demande de répétition automatique hybride, ci-après appelée HARQ, dans un équipement utilisateur, ci-après appelé UE, d'un système de communication sans fil, l'UE fonctionnant dans un mode de fonctionnement sans HS-SCCH, le dispositif de communication (100) comprenant :
un processeur (108) pour exécuter un code de programme (112) ; et
une mémoire (110) couplée au processeur (108) pour stocker le code de programme (112), où le processeur est adapté pour mettre en oeuvre le procédé selon l'une des revendications 1 à 3.
